# EUROPÄISCHE PATENTSCHRIFT

(11) **EP 2 776 272 B1**
(45) Veröffentlichungstag und Bekanntmachung des Hinweises auf die Patenterteilung: **23.12.2020**
(21) Anmeldenummer: 12770008.6
(22) Anmeldetag: 13.09.2012
(51) Int. Cl.: B60L 15/00, B60L 3/00, H02P 6/28, B60L 50/16, B60L 3/04, B60L 15/12, B60L 7/00, H02P 27/06, B60L 50/51

(54) **VERFAHREN UND VORRICHTUNG ZUM ANSTEUERN EINER ELEKTRISCHEN MASCHINE**
METHOD AND APPARATUS FOR CONTROLLING AN ELECTRICAL MACHINE
PROCÉDÉ ET DISPOSITIF DE COMMANDE D'UN MOTEUR ÉLECTRIQUE

(30) Priorität: 10.11.2011 DE 102011086079
(43) Veröffentlichungstag der Anmeldung: 17.09.2014
(73) Patentinhaber: Robert Bosch GmbH, 70442 Stuttgart (DE)
(72) Erfinder: MERTEN, Markus, 71732 Tamm (DE); Raichle, Daniel, 71665 Vaihingen (DE)
(86) Internationale Anmeldenummer: PCT/EP2012/067967
(87) Internationale Veröffentlichungsnummer: WO 2013/068158

(56) Entgegenhaltungen:
- EP-A1- 2 322 374
- US-A1- 2007 194 734
- US-B1- 6 324 038
- US-B1- 6 378 636

## Beschreibung

Die vorliegende Erfindung betrifft ein Verfahren zum Ansteuern einer elektrischen Maschine mittels eines Wechselrichters, insbesondere zur Anwendung in einem Kraftfahrzeug, wobei der Wechselrichter eine Mehrzahl von ansteuerbaren Leistungsschaltern aufweist, die dazu ausgebildet sind, eine Gleichspannung einer mit den Leistungsschaltern gekoppelten Spannungsquelle in eine Wechselspannung zur Versorgung der elektrischen Maschine mit elektrischer Energie zu wandeln.

Ferner betrifft die vorliegende Erfindung eine Vorrichtung zum Ansteuern einer elektrischen Maschine mittels eines Wechselrichters, insbesondere zur Anwendung in einem Kraftfahrzeug, wobei der Wechselrichter eine Mehrzahl von ansteuerbaren Leistungsschaltern aufweist, die dazu ausgebildet sind, eine Gleichspannung einer mit den Leistungsschaltern gekoppelten Spannungsquelle in eine Wechselspannung zur Versorgung der elektrischen Maschine mit elektrischer Energie zu wandeln, mit einer Steuereinheit zur Ansteuerung des Wechselrichters.

Ferner betrifft die vorliegende Erfindung einen Kraftfahrzeug-Antriebsstrang mit einer elektrischen Maschine zum Bereitstellen von Antriebsleistung und mit einer Vorrichtung zum Ansteuern der elektrischen Maschine der oben beschriebenen Art.

### Stand der Technik

Auf dem Gebiet der Kraftfahrzeug-Antriebstechnik ist es allgemein bekannt, eine elektrische Maschine als alleinigen Antrieb oder gemeinsam mit einem Antriebsmotor eines anderen Typs (Hybridantrieb) zu verwenden. Typischerweise bestehen Hybridantriebe aus einer Kombination von einer Brennkraftmaschine und mindestens einer elektrischen Maschine sowie den zugehörigen Energiespeichern in Form eines Kraftstofftanks sowie einer Batterie. Es existieren unterschiedliche Arten von Hybridantrieben, wobei zwischen zwei Grundstrukturen unterschieden wird, und zwar zwischen seriellen und parallelen Hybridantrieben. Eine Kombination beider Strukturen wird zudem als leistungsverzweigter Hybridantrieb bezeichnet.

Der serielle Hybridantrieb zeichnet sich durch eine Reihenschaltung von Energiewandlern aus. Dies erfordert beispielsweise zwei elektrische Maschinen und eine Brennkraftmaschine. Eine der elektrischen Maschinen wird generatorisch betrieben, die andere elektrische Maschine wird motorisch betrieben. Die Brennkraftmaschine selbst ist nicht mit einem Antriebsstrang des Kraftfahrzeugs verbunden. Sie lädt über die generatorisch betriebene elektrische Maschine die Batterie auf und/oder stellt der motorisch betriebenen elektrischen Maschine die benötigte elektrische Energie direkt zur Verfügung. Die Leistung, die zum Antreiben des Kraftfahrzeugs notwendig ist, wird somit ausschließlich von der motorisch betriebenen elektrischen Maschine auf den Antriebsstrang übertragen.

Der parallele Hybridantrieb zeichnet sich dadurch aus, dass sowohl eine Brennkraftmaschine als auch eine elektrische Maschine ihre mechanischen Leistungen an einen Antriebsstrang weitergeben können. Durch eine mechanische Kopplung beider Maschinen mit dem Antriebsstrang können die Leistungen addiert werden. Die Möglichkeit dieser Leistungsaddition erlaubt eine relativ kleine Dimensionierung beider Maschinen, ohne dass sich Nachteile bei Fahrleistungen für das Kraftfahrzeug daraus ergeben.

Es gibt unterschiedliche Arten der Umsetzung paralleler Hybridantriebe. Eine Möglichkeit ist es, die elektrische Maschine direkt mit einer Kurbelwelle der Brennkraftmaschine zu verbinden (Kurbelwellen-Starter-Generator) oder durch einen Riemenantrieb mit der Brennkraftmaschine zu koppeln. Beide Antriebsquellen können somit sowohl gemeinsam als auch einzeln für die Fortbewegung des Kraftfahrzeugs eingesetzt werden. Die elektrische Maschine kann zudem wahlweise generatorisch oder motorisch betrieben werden.

Der leistungsverzweigte Hybridantrieb zeichnet sich durch eine Kombination der bereits dargestellten Prinzipien aus. Der Einsatz eines leistungsverzweigten Getriebes (Planetengetriebe) ermöglicht es, einen Teil der Leistung der Brennkraftmaschine direkt, d.h. mechanisch, an den Antriebsstrang weiterzuleiten, während der verbleibende Teil der Leistung über einen Generator in elektrische Energie umgewandelt wird. Diese elektrische Energie kann wiederum wahlweise in einer Batterie eingespeichert oder direkt an eine nach dem Getriebe angeordneten elektrische Maschine weitergeleitet werden. Beim leistungsverzweigten Hybridantrieb können sowohl die elektrische Maschine als auch die Brennkraftmaschine für die Fortbewegung des Kraftfahrzeugs genutzt werden.

Zur Ansteuerung von elektrischen Maschinen in einem Kraftfahrzeug und insbesondere in einem Hybridfahrzeug dient typischerweise eine Leistungselektronik. Diese weist einen Wechselrichter auf, der eine Gleichspannung/einen Gleichstrom der an Bord des Kraftfahrzeugs befindlichen (Hochspannungs-)Batterie in einen Wechselstrom umwandelt. Die Leistungselektronik führt eine Hochspannung von typischerweise 60 Volt.

Wechselrichter weisen eine Reihe von Leistungsschaltern auf, mit denen die einzelnen Phasen (U, V, W) der elektrischen Maschine wahlweise gegen ein hohes Potential, die sogenannte Zwischenkreisspannung, oder gegen ein niedriges Bezugspotential, insbesondere Masse, geschaltet werden. Mit Hilfe der Leistungsschalter werden somit Wechselspannungen an den drei Phasen der elektrischen Maschine bereitgestellt. Die Leistungsschalter werden von einer Steuereinheit angesteuert, die in Abhängigkeit von dem Fahrerwunsch (Beschleunigen bzw. Bremsen) einen Sollbetriebspunkt für die elektrische Maschine berechnet.

In einem Fehler- oder Standby-/Ruhezustand darf der Wechselrichter keine Energie der drehenden elektrischen Maschine in einen Gleichspannungsteil des Systems abgeben. Der Wechselrichter wird daher in einen sicheren Zustand geschaltet, um eine mögliche Schädigung elektrischer Komponenten zu verhindern. Aus dem Stand der Technik sind im Wesentlichen zwei verschiedene Abschaltverfahren bzw. Betriebsarten bekannt. In einem Kurzschlussbetrieb werden sämtliche mit dem niedrigen Potential verbundenen Schalter geschlossen und alle mit dem hohen Potential verbundenen Schalter geöffnet. In der anderen Betriebsart, die als Freilaufbetrieb bezeichnet wird, werden sämtliche Schalter des Wechselrichters geöffnet.

Bei einer drehenden elektrischen Maschine wird in den drei Phasensträngen der elektrischen Maschine eine Wechselspannung induziert. Im Kurschlussbetrieb fließt infolge der induzierten Wechselspannung über die geschlossenen Leistungsschalter ein Wechselstrom in den Phasensträngen der Maschine. Dies führt zu einer sprungartigen Veränderung des Maschinenmoments, die sich störend auf das Fahrzeugverhalten auswirken kann. Im Freilaufbetrieb wird ebenfalls eine Wechselspannung induziert. Die Höhe der Wechselspannung ist abhängig von der Maschinencharakteristik und der Drehzahl der elektrischen Maschine. Ist die Wechselspannung höher als die Zwischenkreisspannung, so fließt ein Strom in den Gleichspannungsteil der Schaltung. Da Energie in diesen Teil transferiert wird, können Energiespeicher und andere elektrische Bauteile überladen bzw. geschädigt werden.

Da weder eine sprungartige Veränderung des Maschinenmoments noch ein Stromfluß in den Gleichspannungsteil der Schaltung erwünscht ist, ist es bekannt, in Abhängigkeit der Drehzahl, der Maschinencharakteristik und der Höhe der Zwischenkreisspannung entweder in den Kurzschlussbetrieb oder in den Freilaufbetrieb zu schalten. Allerdings sind die Berechnungen zur Umschaltung zwischen diesen beiden Betriebsarten, die auf Basis der Maschinencharakteristik und den Informationen aus einem Drehzahlsensorensystem durchgeführt werden, sehr aufwändig. Außerdem verursacht die Installation des Drehzahlsensorensystems an einer elektrischen Maschine zusätzliche Kosten.

Die US 2007/194734 A1 offenbart ein Ansteuerverfahren für einen Wechselrichter bei dem ein Steuerparameter in Abhängigkeit eines Phasenstroms ermittelt wird. Die US 6,378,636 B1 offenbart ein Verfahren zur Bereitstellung eines negativen Drehmoments an dem Antriebsstrang eines Elektrofahrzeugs.

### Offenbarung der Erfindung

Die vorliegende Erfindung stellt daher ein Verfahren zum Ansteuern einer elektrischen Maschine mittels eines Wechselrichters, insbesondere zur Anwendung in einem Kraftfahrzeug, bereit, wobei der Wechselrichter eine Mehrzahl von ansteuerbaren Leistungsschaltern aufweist, die dazu ausgebildet sind, eine Gleichspannung einer mit den Leistungsschaltern gekoppelten Spannungsquelle in eine Wechselspannung zur Versorgung der elektrischen Maschine mit elektrischer Energie zu wandeln, wobei die elektrische Maschine durch Öffnen aller Leistungsschalter des Wechselrichters zunächst in einen Freilaufbetrieb geschaltet wird, wobei ein Phasenstrom der elektrischen Maschine erfasst wird, wobei die elektrische Maschine von dem Freilaufbetrieb in einen Kurzschlussbetrieb in Abhängigkeit eines Vergleichs des Phasenstroms oder einer ersten von dem Phasenstrom abgeleiteten Größe mit einem ersten Referenzwert geschaltet wird, wobei im Kurzschlussbetrieb die Leistungsschalter, die einem ersten Potential der Spannungsquelle zugeordnet sind, geschlossen werden und wobei die Leistungsschalter, die einem zweiten Potential der Spannungsquelle zugeordnet sind, geöffnet werden, und wobei die elektrische Maschine von dem Kurzschlussbetrieb in den Freilaufbetrieb in Abhängigkeit eines Vergleichs des Phasenstroms oder einer zweiten von dem Phasenstrom abgeleiteten Größe mit einem zweiten Referenzwert geschaltet wird.

Ferner stellt die Erfindung eine Vorrichtung zum Ansteuern einer elektrischen Maschine mittels eines Wechselrichters, insbesondere zur Anwendung in einem Kraftfahrzeug, bereit, wobei der Wechselrichter eine Mehrzahl von ansteuerbaren Leistungsschaltern aufweist, die dazu ausgebildet sind, eine Gleichspannung einer mit den Leistungsschaltern gekoppelten Spannungsquelle in eine Wechselspannung zur Versorgung der elektrischen Maschine mit elektrischer Energie zu wandeln, mit einer Steuereinheit, die den Wechselrichter ansteuert und die dazu ausgebildet ist, das Verfahren der oben genannten Art auszuführen.

Schließlich stellt die vorliegende Erfindung einen Kraftfahrzeug-Antriebsstrang mit einer elektrischen Maschine zum Bereitstellen von Antriebsleistung und mit einer Vorrichtung zum Ansteuern der elektrischen Maschine der oben genannten Art bereit.

### Vorteile der Erfindung

Durch die vorliegende Erfindung kann in Abhängigkeit des Verlaufs der Phasenströme in den Phasensträngen der elektrischen Maschine zwischen einem Kurzschlussbetrieb und einem Freilaufbetrieb gewechselt werden. Aufwändige Berechnungen auf der Basis einer Maschinencharakteristik und den Messwerten aus einem Drehzahlsensorsystem sind nicht notwendig. Zum Einstellen der korrekten Betriebsart können die direkt gemessenen Phasenströme verwendet werden. Außerdem ist es bei Elektrofahrzeugen vorteilhaft für die Sicherheit, wenn eine Umschaltung zwischen dem Freilaufbetrieb und dem Kurzschlussbetrieb in einer Hardwareschaltung umgesetzt wird. In einer Hardwareschaltung ist es jedoch aufwändig, eine Drehzahlauswertung durchzuführen. Des Weiteren wird durch die Vielfalt der Drehzahlsensorsysteme die Kopplung an die Hardwareschaltung erschwert. Durch die vorliegende Erfindung wird dieses Problem gelöst, da die Umschaltung zwischen den beiden Betriebsarten in Abhängigkeit des Verlaufs der Phasenströme erfolgt.

Von besonderem Vorzug ist es, wenn die erste von dem Phasenstrom abgeleitete Größe ein Strombetrag des Phasenstroms ist, wobei die elektrische Maschine von dem Freilaufbetrieb in den Kurzschlussbetrieb geschaltet wird, sofern der Strombetrag des Phasenstroms den ersten Referenzwert überschreitet.

Falls im Freilaufbetrieb der Strombetrag des Phasenstroms den ersten Referenzwert überschreitet, ist die Drehzahl der elektrischen Maschine so hoch, dass Strom und somit Energie in den Gleichspannungsteil des Systems fließt und somit auch ein Moment an der Maschinenwelle entsteht. Energiespeicher im Gleichspannungsteil können überladen und damit dauerhaft geschädigt werden. Anhand dieses Vergleichs mit dem ersten Referenzwert kann somit von dem Freilaufbetrieb in den Kurzschlussbetrieb geschaltet werden.

Gemäß einer weiteren bevorzugten Ausführungsform ist die zweite von dem Phasenstrom abgeleitete Größe eine Frequenz des Phasenstroms, wobei die elektrische Maschine von dem Kurzschlussbetrieb in den Freilaufbetrieb geschaltet wird, sofern die Frequenz des Phasenstroms den zweiten Referenzwert unterschreitet.

Die Frequenz des Phasenstroms hängt proportional zusammen mit der Drehzahl der elektrischen Maschine. Liegt die Frequenz unterhalb des zweiten Referenzwerts, dann kann wieder in den Freilaufbetreib geschaltet werden, da bei geringer Frequenz des Phasenstroms sichergestellt ist, dass die induzierte Spannung in dem anschließenden Freilaufbetrieb so gering ist, dass kein Strom und damit keine Energie in den Gleichspannungsteil fließt.

Gemäß einer weiteren Ausführungsform wird wenigstens ein weiterer Phasenstrom erfasst, wobei das Umschalten der elektrischen Maschine von dem Freilaufbetrieb in den Kurzschlussbetrieb in Abhängigkeit eines Vergleichs des weiteren Phasenstroms oder einer ersten von dem weiteren Phasenstrom abgeleiteten Größe mit einem weiteren ersten Referenzwert erfolgt.

Mit Hilfe des weiteren erfassten Phasenstroms und des zusätzlichen Vergleichs kann die Umschaltung der elektrischen Maschine von dem Freilaufbetrieb in den Kurzschlussbetrieb noch zuverlässiger durchgeführt werden.

In einer weiteren Ausführungsform weist der weitere erste Referenzwert den gleichen Wert auf wie der erste Referenzwert.

Da die elektrische Maschine hinsichtlich ihrer Wicklungen im Wesentlichen symmetrisch aufgebaut ist, können somit die Vergleiche des Phasenstroms und des weiteren Phasenstroms vereinfacht werden.

Des Weiteren ist es bevorzugt, wenn das Umschalten der elektrischen Maschine von dem Kurzschlussbetrieb in den Freilaufbetrieb in Abhängigkeit eines Vergleichs des weiteren Phasenstroms oder einer zweiten von dem weiteren Phasenstrom abgeleiteten Größe mit einem weiteren zweiten Referenzwert erfolgt.

Durch eine Kombination der Vergleiche des Phasenstroms und des weiteren Phasenstroms kann die elektrische Maschine sicherer bzw. zuverlässiger von dem Kurzschlussbetrieb in den Freilaufbetrieb geschaltet werden.

Gemäß einer weiteren Ausführungsform weist der weitere zweite Referenzwert den gleichen Wert auf wie der zweite Referenzwert.

Durch diese Maßnahme werden die durchzuführenden Vergleiche vereinfacht und damit beschleunigt.

Es versteht, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.

### Kurze Beschreibung der Zeichnungen

Ausführungsbeispiele der Erfindung sind in der Zeichnung dargestellt und werden in der nachfolgenden Beschreibung näher erläutert. Es zeigen:
Fig. 1 eine schematische Darstellung einer dreiphasigen elektrischen Maschine mit Wechselrichter;
Fig. 2 ein Zustandsdiagramm verschiedener Betriebszustände einer elektrischen Maschine bei einer Störung; und
Fig. 3 eine beispielhafte Darstellung der drei Phasenströme in den drei Phasensträngen der elektrischen Maschine.

### Ausführungsformen der Erfindung

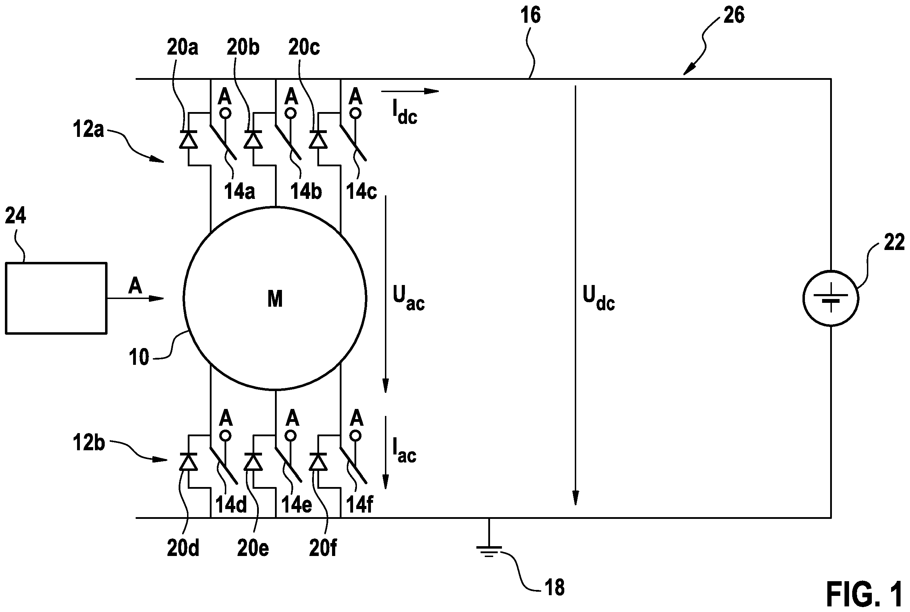

Fig. 1 zeigt eine schematische Darstellung einer elektrischen Maschine 10 mit einem daran angeschlossenen Wechselrichter 12. Der Wechselrichter 12 weist mehrere Leistungsschalter 14a bis 14f auf, die mit den einzelnen Phasen U, V, W der elektrischen Maschine 10 verbunden sind und die die Phasen U, V, W entweder gegen ein hohes Versorgungspotential 16 oder ein niedriges Bezugspotential (Masse) 18 schalten. Die Potentialdifferenz zwischen dem hohen Versorgungspotential 16 und dem niedrigen Versorgungspotential 18 bildet eine Gleichspannung U_dc, die sogenannte Zwischenkreisspannung. Die Gleichspannung U_dc wird von einer Spannungsquelle 22 bzw. einer Batterie 22 bereitgestellt. Außerdem weist der Wechselrichter 12 mehrere Freilaufdioden 20a bis 20f auf, die jeweils parallel zu den Leistungsschaltern 14a bis 14f angeordnet sind.

Der Wechselrichter 12 bestimmt Leistung und Betriebsart der elektrischen Maschine 10 und wird von einer Steuereinheit 24 entsprechend angesteuert. Zu diesem Zweck ist ein Ausgang A der Steuereinheit 24 mit den Leistungsschaltern 14a bis 14f elektrisch gekoppelt. Die elektrische Maschine 10 kann somit wahlweise im Motor- oder Generatorbetrieb betrieben werden. Im Motorbetrieb unterstützt die elektrische Maschine 10 zum Beispiel einen Verbrennungsmotor mit einem zusätzlichen Antriebsmoment. Im Generatorbetrieb wird mechanische Energie, zum Beispiel während eines Bremsvorgangs, in elektrische Energie gewandelt und in einem Energiespeicher, vorliegend in der Batterie 22, gespeichert.

Bei einer Störung, die zum Beispiel durch einen zu hohen Batteriestrom oder einen zu hohen Zuleitungsstrom entstehen kann, wird der Wechselrichter 12 in einen sicheren Zustand geschaltet, um eine mögliche Schädigung elektrischer Komponenten oder ein Überladen der Batterie 22 zu verhindern. Dazu stehen prinzipiell zwei verschiedene Betriebsarten zur Verfügung. In der ersten Betriebsart, dem sogenannten Kurzschlussbetrieb, werden die Leistungsschalter 14d bis 14f, die mit dem niedrigen Versorgungspotential 18 gekoppelt sind, geschlossen und die Leistungsschalter 14a bis 14c, die mit dem hohen Versorgungspotential 16 gekoppelt sind, geöffent. Dreht sich ein Läufer in einem Ständer der elektrischen Maschine 10, so wird eine Wechselspannung U-_ac in den Phasensträngen der elektrischen Maschine 10 induziert. Durch die induzierte Spannung U_ac fließt in den drei Phasensträngen der elektrischen Maschine 10 über die geschlossenen Leistungsschalter 14d bis 14f ein Wechselstrom I_ac. Infolge des Wechselstroms I_ac wird ein Kurzschlussmoment an einer Welle der elektrischen Maschine 10 erzeugt. Es wird jedoch kein Strom bzw. keine Energie in einen Gleichspannungsteil 26 der Schaltungsanordnung aus Fig. 1 geleitet.

In einer alternativen Ausführungsform des Kurzschlussbetriebs der elektrischen Maschine 10 können die Leistungsschalter 14d bis 14f geöffnet und die Leistungsschalter 14a bis 14c geschlossen werden.

In der zweiten Betriebsart, dem sogenannten Freilaufbetrieb, werden sämtliche Leistungsschalter 14a bis 14f des Wechselrichters 12 geöffnet. Im Freilaufbetrieb wird ebenfalls eine Wechselspannung U_ac induziert. Die Höhe der Wechselspannung U_ac ist abhängig von der Maschinencharakteristik und der Drehzahl der elektrischen Maschine 10. Ist die Wechselspannung U_ac höher als die Gleichspannung U_dc, so fließt ein Strom I_dc über die Freilaufdioden 20a bis 20f in den Gleichspannungsteil 26. Somit wird auch Energie in den Gleichspannungsteil 26 transferiert. Es besteht die Gefahr, dass die Batterie 22 und andere elektrische Bauteile überladen bzw. geschädigt werden. Ist die induzierte Wechselspannung U_ac im Freilaufbetrieb kleiner als die Gleichspannung U_dc, so wird kein Moment an der Welle der elektrischen Maschine 10 erzeugt und es fließt kein Strom I_dc in den Gleichspannungsteil 26. Da weder eine sprunghafte Veränderung des Drehmoments an der Welle der elektrischen Maschine 10 noch ein Strom I_dc bzw. ein Energietransfer in den Gleichspannungsteil 26 erwünscht ist, wird erfindungsgemäß in Abhängigkeit des Verlaufs des Phasenstroms I_ac entweder in den Kurzschlussbetrieb oder in den Freilaufbetrieb geschaltet.

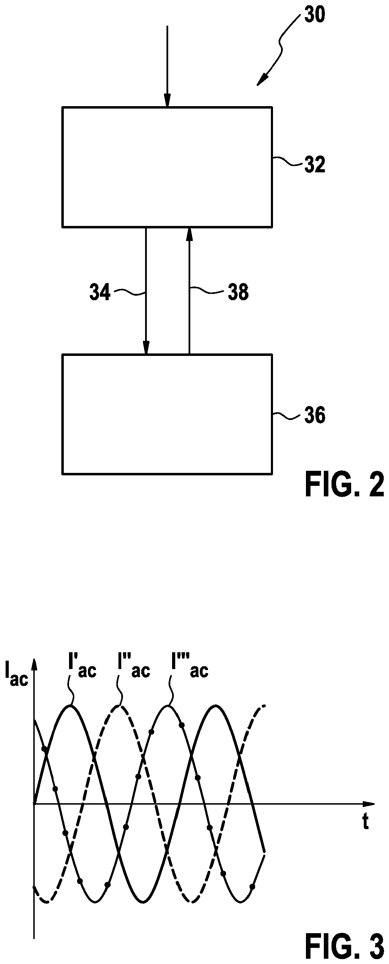

Fig. 2 zeigt ein Zustandsdiagramm 30 verschiedener Betriebzustände der elektrischen Maschine 10 bei einer Störung.

Bei einer auftretenden Störung wird die elektrische Maschine 10 zunächst in einen ersten Betriebszustand 32, den Freilaufbetrieb 32, geschaltet. Im Freilaufbetrieb 32 sind sämtlicher Leistungsschalter 14a bis 14f geöffnet. Durch den drehenden Läufer der elektrischen Maschine 10 wird in den Phasensträngen der elektrischen Maschine 10 die Spannung U_ac induziert. Die Wechselspannung U_ac resultiert in dem Wechselstrom I_ac. Wenn die induzierte Spannung U_ac die Gleichspannung U_dc übersteigt, fließt der gleichgerichtete Strom I_dc über die Freilaufdioden 20a bis 20f. Falls also der Strombetrag des induzierten Wechselstroms I_ac einen ersten Referenzwert überschreitet, ist die Drehzahl der elektrischen Maschine 10 so hoch, dass der Strom I_dc und somit Energie in den Gleichspannungsteil 26 fließt. Des Weiteren entsteht durch die hohe induzierte Spannung U_ac und den daraus resultierenden Strom I_ac ein hohes Bremsmoment an der Maschinenwelle der elektrischen Maschine 10. Mit Hilfe eines Vergleichs 34, bei dem der Strombetrag des Phasenstroms I_ac mit dem ersten Referenzwert verglichen wird, wird entschieden, ob die elektrische Maschine 10 von dem Freilaufbetrieb 32 in einen zweiten Betriebszustand 36, den Kurzschlussbetrieb 36, geschaltet wird. Der erste Referenzwert wird dabei so gewählt, dass keine Energie in den Gleichspannungsteil 26 transferiert wird, wenn die Werte des Strombetrags des Phasenstroms I_ac den ersten Referenzwert unterschreiten. Übersteigt der Strombetrag des Phasenstroms I_ac den ersten Referenzwert, so wird an der elektrischen Maschine 10 über die Leistungsschalter 14a bis 14f der Kurzschlussbetrieb 36 eingestellt. In dem vorliegenden Beispiel sind im Kurzschlussbetrieb 36 die Leistungsschalter 14a bis 14c geöffnet und die Leistungsschalter 14d bis 14f geschlossen. Alternativ können die Leistungsschalter 14a bis 14c geschlossen und die Leistungsschalter 14d bis 14f geöffnet werden. Auch im Kurzschlussbetrieb 36 wird die Wechselspannung U_ac induziert. Über die geschlossenen Leistungsschalter 14d bis 14f fließt der Wechselstrom I_ac. Dadurch wird ein Kurzschlussmoment an der Welle der elektrischen Maschine 10 erzeugt, das jedoch kleiner ist als das Bremsmoment im vorhergehenden Freilaufbetrieb 32. Außerdem wird kein Gleichstrom I_dc in den Gleichspannungsteil 26 geleitet. Damit besteht keine Gefahr, dass die Batterie 22 bzw. andere elektrische Bauteile überladen bzw. geschädigt werden.

Sobald die Drehzahl der elektrischen Maschine 10 auf eine vordefinierte Schwelle gefallen ist, wird von dem Kurzschlussbetrieb 36 wieder in den Freilaufbetrieb 32 geschaltet. Dazu wird die Frequenz der Phasenströme I_ac in den Phasensträngen der elektrischen Maschine 10 gemessen. Fig. 3 zeigt einen beispielhaften Verlauf der drei Phasenströme I_ac', I_ac" und I_ac"', die im Kurzschlussbetrieb 36 und drehender elektrischer Maschine 10 über die geschlossenen Leistungsschalter 14d bis 14f in den drei Phasensträngen der elektrischen Maschine 10 fließen. Wie der Fig. 3 zu entnehmen ist, sind die drei Phasenströme I_ac um jeweils 120° zueinander phasenverschoben.

Im vorliegenden Beispiel wird nun die Frequenz von einem der Phasenströme I_ac bestimmt. Die Frequenz des Phasenstroms I_ac hängt proportional zusammen mit der Drehzahl der elektrischen Maschine 10. Liegt die Frequenz des Phasenstroms I_ac, und damit die Drehzahl der elektrischen Maschine 10, unterhalb eines zweiten Referenzwerts, dann wird die elektrische Maschine 10 in den Freilaufbetrieb 32 geschaltet. Bei einer geringen Frequenz des Phasenstroms I_ac im Kurzschlussbetrieb 36 ist sichergestellt, dass bei einem anschließenden Schalten in den Freilaufbetrieb 32 die dadurch induzierte Spannung U_ac so gering ist, dass kein Strom I_dc in den Gleichspannungsteil 26 des Systems fließt, das heißt, dass die induzierte Spannung U_ac kleiner ist als die Gleichspannung U_dc. Der zweite Referenzwert wird auf der Grundlage dieser Schwelle dimensioniert. An der Welle der elektrischen Maschine 10 wird kein Moment erzeugt. Die Batterie 22 oder auch andere elektrische Bauteile können nicht überladen bzw. geschädigt werden. Damit erfolgt die Umschaltung von dem Kurzschlussbetrieb 36 in den Freilaufbetrieb 32 in Abhängigkeit eines Vergleichs 38, bei dem die Frequenz des Phasenstroms I_ac mit dem zweiten Referenzwert verglichen wird.

Das Umschalten zwischen den beiden Betriebsarten (Freilaufbetrieb 32, Kurzschlussbetrieb 36) erfolgt in Abhängigkeit des Verlaufs des Phasenstroms I_ac. Dadurch können aufwändige Berechnungen aus der Maschinencharakteristik der elektrischen Maschine 10 eingespart werden. Des Weiteren ist es nicht notwendig, ein Drehzahlsensorensystem vorzusehen.

In einer weiteren nicht gezeigten Ausführungsform des Verfahrens können auch mehrere Phasenströme I_ac erfasst werden. Die Strombeträge bzw. Frequenzen dieser weiteren Phasenströme I_ac werden dann gemäß den oben genannten Vergleichen 34, 38 mit weiteren Referenzwerten verglichen. Die weiteren Referenzwerte können gleiche Werte aufweisen wie der erste bzw. zweite Referenzwert. Dabei kann die elektrische Maschine 10 von dem Freilaufbetrieb 32 in den Kurzschlussbetrieb 36 geschaltet werden, sofern wenigstens der Strombetrag eines Phasenstroms I_ac den ersten Referenzwert überschreitet. Alternativ kann diese Umschaltung erfolgen, sofern die Strombeträge von zwei oder von allen Phasenströmen I_ac den ersten Referenzwert überschreiten. Analog kann die Umschaltung der elektrischen Maschine 10 von dem Kurschlussbetrieb 36 in den Freilaufbetrieb 32 erfolgen, sofern wenigstens die Frequenz eines Phasenstroms I_ac den zweiten Referenzwert unterschreitet. Alternativ kann diese Umschaltung erfolgen, sofern die Frequenzen von zwei oder allen Phasenströmen I_ac den zweiten Referenzwert unterschreiten.

Obgleich somit bevorzugte Ausführungsformen des erfindungsgemäßen Verfahrens gezeigt worden sind, versteht sich, dass verschiedene Abwandlungen und Modifikationen vorgenommen werden können.

Beispielsweise kann bei dem Vergleich 34 eine andere Anzahl von Phasenströmen I_ac berücksichtigt werden als bei dem Vergleich 38.

Des Weiteren kann der erste Referenzwert für die Vergleiche mit unterschiedlichen Phasenströmen I_ac den gleichen oder unterschiedliche Werte aufweisen. Dies gilt analog für den zweiten Referenzwert.

Das erfindungsgemäße Verfahren kann sowohl in Software als auch in Hardware umgesetzt werden. Die Umsetzung in Hardware ermöglicht eine schnelle Umschaltung zwischen den beiden Betriebsarten 32 und 36. Durch das erfindungsgemäße Verfahren erfolgt die Umschaltung zwischen diesen beiden Betriebsarten 32, 36 über eine Auswertung der Phasenstromcharakteristik. Ein aufwändiges Drehzahlsensorensystem, das an der elektrischen Maschine 10 angeordnet ist, wird damit nicht benötigt. Dies erleichtert eine Umsetzung der Betriebsartenumschaltung in einer Hardwareschaltung, da die Hardwareschaltung nicht an verschiedene Drehzahlsensorensysteme angepasst werden muss.

## Patentansprüche

1. Verfahren zum Ansteuern einer elektrischen Maschine (10) mittels eines Wechselrichters (12), insbesondere zur Anwendung in einem Kraftfahrzeug, wobei der Wechselrichter (12) eine Mehrzahl von ansteuerbaren Leistungsschaltern (14) aufweist, die dazu ausgebildet sind, eine Gleichspannung einer mit den Leistungsschaltern (14) gekoppelten Spannungsquelle (22) in eine Wechselspannung zur Versorgung der elektrischen Maschine (10) mit elektrischer Energie zu wandeln, **gekennzeichnet durch** die Schritte:
- Schalten der elektrischen Maschine (10) in einen Freilaufbetrieb (32) durch Öffnen aller Leistungsschalter (14) des Wechselrichters (12),
- Erfassen eines Phasenstroms der elektrischen Maschine (10),
- Umschalten der elektrischen Maschine (10) von dem Freilaufbetrieb (32) in einen Kurzschlussbetrieb (36) in Abhängigkeit eines Vergleichs (34) des Phasenstroms oder einer ersten von dem Phasenstrom abgeleiteten Größe mit einem ersten Referenzwert, wobei im Kurzschlussbetrieb (32) die Leistungsschalter (14), die einem ersten Potential der Spannungsquelle (22) zugeordnet sind, geschlossen werden und wobei die Leistungsschalter (14), die einem zweiten Potential der Spannungsquelle (22) zugeordnet sind, geöffnet werden, und
- Umschalten der elektrischen Maschine (10) von dem Kurzschlussbetrieb (36) in den Freilaufbetrieb (32) in Abhängigkeit eines Vergleichs (38) des Phasenstroms oder einer zweiten von dem Phasenstrom abgeleiteten Größe mit einem zweiten Referenzwert.

2. Verfahren nach Anspruch 1, wobei die erste von dem Phasenstrom abgeleitete Größe ein Strombetrag des Phasenstroms ist und wobei die elektrische Maschine (10) von dem Freilaufbetrieb (32) in den Kurzschlussbetrieb (36) geschaltet wird, sofern der Strombetrag des Phasenstroms den ersten Referenzwert überschreitet.

3. Verfahren nach einem der Ansprüche 1 bis 2, wobei die zweite von dem Phasenstrom abgeleitete Größe eine Frequenz des Phasenstroms ist und wobei die elektrische Maschine (10) von dem Kurzschlussbetrieb (36) in den Freilaufbetrieb (32) geschaltet wird, sofern die Frequenz des Phasenstroms den zweiten Referenzwert unterschreitet.

4. Verfahren nach einem der Ansprüche 1 bis 3, wobei wenigstens ein weiterer Phasenstrom erfasst wird und wobei das Umschalten der elektrischen Maschine (10) von dem Freilaufbetrieb (32) in den Kurzschlussbetrieb (36) in Abhängigkeit eines Vergleichs (34) des weiteren Phasenstroms oder einer ersten von dem weiteren Phasenstrom abgeleiteten Größe mit einem weiteren ersten Referenzwert erfolgt.

5. Verfahren nach Anspruch 4, wobei der weitere erste Referenzwert den gleichen Wert aufweist wie der erste Referenzwert.

6. Verfahren nach einem der Ansprüche 4 bis 5, wobei das Umschalten der elektrischen Maschine (10) von dem Kurzschlussbetrieb (36) in den Freilaufbetrieb (32) in Abhängigkeit eines Vergleichs (38) des weiteren Phasenstroms oder einer zweiten von dem weiteren Phasenstrom abgeleiteten Größe mit einem weiteren zweiten Referenzwert erfolgt.

7. Verfahren nach Anspruch 6, wobei der weitere zweite Referenzwert den gleichen Wert aufweist wie der zweite Referenzwert.

8. Vorrichtung zum Ansteuern einer elektrischen Maschine (10) mittels eines Wechselrichters (12), insbesondere zur Anwendung in einem Kraftfahrzeug, wobei der Wechselrichter (12) eine Mehrzahl von ansteuerbaren Leistungsschaltern (14) aufweist, die dazu ausgebildet sind, eine Gleichspannung einer mit den Leistungsschaltern (14) gekoppelten Spannungsquelle (22) in eine Wechselspannung zur Versorgung der elektrischen Maschine (10) mit elektrischer Energie zu wandeln, mit einer Steuereinheit (24), die den Wechselrichter (12) ansteuert, **dadurch gekennzeichnet, dass** die Steuereinheit (24) dazu ausgebildet ist, das Verfahren nach einem der Ansprüche 1 bis 7 auszuführen.

9. Kraftfahrzeug-Antriebsstrang mit einer elektrischen Maschine (10) zum Bereitstellen von Antriebsleistung und mit einer Vorrichtung zum Ansteuern der elektrischen Maschine (10) nach Anspruch 8.

## Claims

1. Method for controlling an electric machine (10) by means of an inverter (12), in particular for use in a motor vehicle, wherein the inverter (12) has a plurality of controllable power switches (14) which are designed to convert a direct voltage of a voltage source (22), coupled to the power switches (14), into an alternating voltage for supplying the electric machine (10) with electrical energy, **characterized by** the steps:
- switching the electric machine (10) into an open-circuit mode (32) by opening all the power switches (14) of the inverter (12),
- detecting a phase current of the electric machine (10),
- switching over the electric machine (10) from the open-circuit mode (32) into a short-circuit mode (36) as a function of a comparison (34) of the phase current or of a first variable, which is derived from the phase current, with a first reference value, wherein in the short-circuit mode (32) the power switches (14) which are assigned to a first potential of the voltage source (22) are closed, and wherein the power switches (14) which are assigned to a second potential of the voltage source (22) are opened, and
- switching over the electric machine (10) from the short-circuit mode (36) into the open-circuit mode (32) as a function of a comparison (38) of the phase current or of a second variable, which is derived from the phase current, with a second reference value.

2. Method according to Claim 1, wherein the first variable which is derived from the phase current is an absolute value of the phase current, and wherein the electric machine (10) is switched from the open-circuit mode (32) into the short-circuit mode (36) if the absolute value of the phase current exceeds the first reference value.

3. Method according to one of Claims 1 to 2, wherein the second variable which is derived from the phase current is a frequency of the phase current, and wherein the electric machine (10) is switched from the short-circuit mode (36) into the open-circuit mode (32) if the frequency of the phase current undershoots the second reference value.

4. Method according to one of Claims 1 to 3, wherein at least a further phase current is detected, and wherein the switching over of the electric machine (10) from the open-circuit mode (32) into the short-circuit mode (36) takes place as a function of a comparison (34) of the further phase current or of a first variable, which is derived from the further phase current, with a further first reference value.

5. Method according to Claim 4, wherein the further first reference value has the same value as the first reference value.

6. Method according to one of Claims 4 to 5, wherein the switching over of the electric machine (10) from the short-circuit mode (36) into the open-circuit mode (32) takes place as a function of a comparison (38) of the further phase current or of a second variable, which is derived from the further phase current, with a further second reference value.

7. Method according to Claim 6, wherein the further second reference value has the same value as the second reference value.

8. Apparatus for controlling an electric machine (10) by means of an inverter (12), in particular for use in a motor vehicle, wherein the inverter (12) has a plurality of controllable power switches (14) which are designed to convert a direct voltage of a voltage source (22), coupled to the power switches (14), into an alternating voltage for supplying the electric machine (10) with electrical energy, having a control unit (24) which controls the inverter (12), **characterized in that** the control unit (24) is designed to carry out the method according to one of Claims 1 to 7.

9. Motor vehicle drive train having an electric machine (10) for making available drive power and having an apparatus for controlling the electric machine (10) according to Claim 8.

## Revendications

1. Procédé permettant d'exciter une machine électrique (10) au moyen d'un onduleur (12), en particulier pour une application sur un véhicule automobile, l'onduleur (12) présentant une pluralité de sectionneurs de puissance (14) pouvant être excités, qui sont réalisés pour convertir une tension continue d'une source de tension (22) couplée aux sectionneurs de puissance (14) en une tension alternative pour alimenter la machine électrique (10) en énergie électrique, **caractérisé par** les étapes consistant à :
- commuter la machine électrique (10) sur un fonctionnement en roue libre (32) en ouvrant tous les sectionneurs de puissance (14) de l'onduleur (12),
- détecter un courant de phase de la machine électrique (10),
- commuter la machine électrique (10) du fonctionnement en roue libre (32) sur un fonctionnement en court-circuit (36) en fonction d'une comparaison (34) du courant de phase ou d'une première grandeur dérivée du courant de phase avec une première valeur de référence, dans lequel, dans le fonctionnement en court-circuit (32), les sectionneurs de puissance (14) qui sont associés à un premier potentiel de la source de tension (22) sont fermés et les sectionneurs de puissance (14) associés à un deuxième potentiel de la source de tension (22) sont ouverts, et
- commuter la machine électrique (10) du fonctionnement en court-circuit (36) sur le fonctionnement en roue libre (32) en fonction d'une comparaison (38) du courant de phase ou d'une deuxième grandeur dérivée du courant de phase avec une deuxième valeur de référence.

2. Procédé selon la revendication 1, dans lequel la première grandeur dérivée du courant de phase est une quantité de courant du courant de phase, et la machine électrique (10) est commutée du fonctionnement en roue libre (32) au fonctionnement en court-circuit (36) dans la mesure où la quantité de courant du courant de phase dépasse la première valeur de référence.

3. Procédé selon l'une quelconque des revendications 1 et 2, dans lequel la deuxième grandeur dérivée du courant de phase est une fréquence du courant de phase, et la machine électrique (10) est commutée du fonctionnement en court-circuit (36) au fonctionnement en roue libre (32) dans la mesure où la fréquence du courant de phase soupasse la deuxième valeur de référence.

4. Procédé selon l'une quelconque des revendications 1 à 3, dans lequel au moins un courant de phase supplémentaire est détecté, et la commutation de la machine électrique (10) du fonctionnement en roue libre (32) au fonctionnement en court-circuit (36) est effectuée en fonction d'une comparaison (34) du courant de phase supplémentaire ou d'une première grandeur dérivée du courant de phase avec une première valeur de référence supplémentaire.

5. Procédé selon la revendication 4, dans lequel la première valeur de référence supplémentaire présente la même valeur que la première valeur de référence.

6. Procédé selon l'une quelconque des revendications 4 et 5, dans lequel la commutation de la machine électrique (10) du fonctionnement en court-circuit (36) au fonctionnement en roue libre (32) est effectuée en fonction d'une comparaison (38) du courant de phase supplémentaire ou d'une deuxième grandeur dérivée du courant de phase avec une deuxième valeur de référence supplémentaire.

7. Procédé selon la revendication 6, dans lequel la deuxième valeur de référence supplémentaire présente la même valeur que la deuxième valeur de référence.

8. Dispositif permettant d'exciter une machine électrique (10) au moyen d'un onduleur (12), en particulier pour une application dans un véhicule automobile, l'onduleur (12) présentant une pluralité de sectionneurs de puissance (14) pouvant être excités, qui sont réalisés pour convertir une tension continue d'une source de tension (22) couplée aux sectionneurs de puissance (14) en une tension alternative pour alimenter la machine électrique (10) en énergie électrique, comprenant une unité de commande (24) qui excite l'onduleur (12), **caractérisé en ce que** l'unité de commande (24) est réalisée pour exécuter le procédé selon l'une quelconque des revendications 1 à 7.

9. Chaîne cinématique de véhicule automobile comprenant une machine électrique (10) pour fournir une puissance d'entraînement et un dispositif permettant d'exciter la machine électrique (10) selon la revendication 8.
